# EUROPEAN PATENT APPLICATION

(11) **EP 1 990 236 A1**
(43) Date of publication of application: **12.11.2008**
(21) Application number: 07009268.9
(22) Date of filing: 08.05.2007
(51) Int. Cl.: B60N 3/04

(54) **Automotive carpet arrangement comprising a main floor carpet with insert mat**

(71) Applicant: Rieter Technologies AG, 8406 Winterthur (CH)
(72) Inventor: Cawthra, Chris, West Yorkshire, BD15 OEY (GB); Taylor, James, 8604 Volketswil (CH)
(74) Representative: Van Adrichem Geisseler, Johanna

(57) **Abstract**

A carpet arrangement comprises a main floor carpet (1) with recesses (4) and pockets (5) into which tabs (3) of an insert mat (2) are arranged.

## Description

Present invention is concerned with an automotive carpet arrangement in accordance with the preamble of claim 1 and comprising a main floor carpet suitable to carry an insert mat, as well as a main floor carpet in accordance with the preamble of claim 3 and as well as an insert mat therefore in accordance with the preamble of claim 4.

Such carpets and insert mats alter the aesthetic appearance of the carpet and are well known in the art. WO 89/04760 discloses an automotive main floor carpet comprising an accessory floor mat, which is inserted into a web-free area.

US 2006/0051557 discloses a carpet comprising a recessed portion with a peripheral edge extending around the recessed portion and an insert mat within the recessed portion that. The insert mat is releasable secured to the peripheral edge.

Unfortunately, these structures are uneconomic to manufacture and require expensive assembly or production methods.

Present invention aims to overcome the deficiencies of known main floor carpets with insert mats and generally aims to achieve a cost effective, aesthetically and acoustically enhanced main-floor-carpet / insert-mat arrangement. In particular it is the aim of present invention to achieve a main-floor-carpet / insert-mat arrangement with the ability to provide matching or contrasting materials, the ability to provide changeable/reversible insert mats comprising different materials; the ability to use sound absorptive option mats, i.e. create areas with higher acoustic performance, the ability to achieve - independent of the used insert mat - a flush appearance of the complete arrangement, the ability to achieve enhanced security for the fitment of the insert mat with the main floor carpet, the ability to achieve more aesthetically pleasing fitment appearance, the ability to achieve enhanced security for the fixation of the insert mat to the main floor carpet, the ability to achieve such fixation without extra fixing elements, the ability to achieve an invisible fixation (i.e. no visual retainers)of the insert mat to the main floor carpet, the ability to achieve an enhanced ease for correct installation of the insert mat to the main floor carpet. In addition it is the aim of present invention to simplify the assembly process and to reduce its costs - e.g. to omit the painful adjustment of the cooperating retainers between insert mat and main floor carpet.

These objectives are achieved by a carpet arrangement in accordance with claim 1 and in particular by a carpet arrangement comprising a main floor carpet in accordance with claim 3 suitable to carry an insert mat in accordance with claim 4.

Present invention allows on the one the hand to design the main floor carpet to meet cost savings, while on the other hand the combination of main floor carpet and insert map leads to a plurality of advantages, such as higher acoustic performance, a more secure and aesthetically satisfying fitting to the main floor carpet, increased variety and economic design.

The following drawing together with the description serves to explain principles of the present invention.

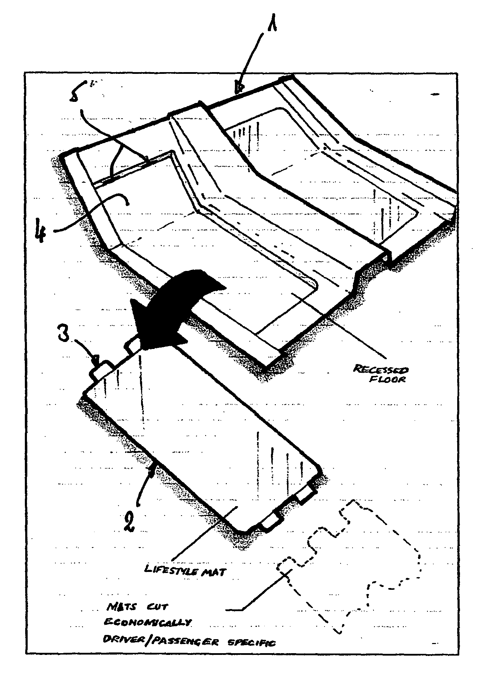

Fig. 1 is a perspective view of a recessed main floor carpet and its corresponding insert mat.

The shown carpet arrangement consists of a main floor carpet 1 with a recessed area 4 comprising pockets 5 and an insert mat 2 comprising tabs 3. The main floor carpet is a multi-component carpet consisting of an aesthetic surface that may be a tufted carpet, a dilour neddle punched material, a plain non-woven material, a TPO, PVC or any moldable substrate with aesthetic surface. Below this aesthetic surface there is optionally an acoustic layer which may be a needled punched felt, a mass barrier (heavy) layer, a thermoplastic resin (LDPE or PP), an airlay felt, a spun bond, melt blown, foam or other thermoformable material.

Below the optional acoustic layer there may a decoupler layer. Typical decoupler layers include open or closed cell PU foam, needle punched felts or airlay felts.

The components of the floor carpet are molded together using known techniques to form a three dimensional carpet system.

One or more pockets are formed in the main floor carpet to receive tabs which are integral to the insert mat, also called "lifestyle mat". These tabs act as fixation means for the insert mat. The pockets are in the main floor carpet, in particular in the walls of the recess of the main floor carpet or in a raised area of the carpet molding. Clearly, space must be available for the pocket to receive the tabs. This might be available due to design the decoupler layer or by inclusion of an additional component as described below.

It is essential for the invention that the main floor carpet is provided with a recess in order to fittingly receive the insert mat.

The lifestyle mats are multi component systems that consist of an aesthetic face fabric and one or more further materials. Typical assemblies would be:
Aestethic layer/acoustic layer/decoupler layer - non-reversible system.
Aesthetic layer/acoustic layer/aesthetic layer - reversible system.
Aesthetic layer/heavy layer.

The lifestyle mat may contain one ore more acoustic layer, the acoustic layers can be porous or non-porous.

The lifestyle mat is designed to incorporate one or more "tabs" within the design. These tabs locate in the pockets of the floor carpet to act as fixation.

The lifestyle mat can be manufactured by lamination, cutting end edge finishing - a typical whipped, serged or taped edge can be envisaged.

Additionally, the lifestyle mat can be molded to provide a shaped edge as shown in the illustrations.

If desired additional components can be affixed to the rear of the floor carpet to ensure an opening is provided for the tabs to locate into. Said components are illustrated in the provided drawings. The components might be made from plastic, expanded PP or polystyrene, wood, metal or other similar structural materials.

The floor carpet or the lifestyle mat might additionally be provided with a heelmat, footrest, ventilation outlet, access flaps, storage nets, integrated storage areas or other components.

Typical materials for the carpet arrangement comprise a non-woven for the main floor carpet and a non-woven for the insert mat. This leads to a basic low cost arrangement. In order to achieve a luxury embodiment with high abrasion resistance a tufted material for the main floor carpet and the insert mat is used. In order to achieve enhanced acoustic properties - in particular high transmission loss - and a water resistant main floor carpet, the main floor carpet material should comprise a TPO material and should be combined with an insert mat comprising a woven material. Another embodiments comprises a main floor carpet made of "Malivlies" and an insert mat made of TPO material. A further embodiments comprises a main floor carpet made of printed TPO material and an insert mat comprising artificial grass type material. It is to be understood that the insert mat may be assembled in accordance with the assembly package disclosed in US 6,145,617 (RUL-construction), in order to increase the acoustic absorption properties of the complete arrangement.

Fixation is commonly made by modifications of both the main floor carpet and the insert mat, e.g. by use of studs in the main floor carpet and receiving washers in the insert mats. The invention additionally solves the problem of fixation by simply modifying the shape of the main floor carpet and the shape of the insert mat. This allows to omit additional parts for the fixation. In the simplest form a tab and a corresponding pocket is foreseen.

## Claims

1. Automotive carpet arrangement comprising a main floor carpet (1) with at least a recessed area (4) suitable to carry an insert mat (2) and an insert mat (2) suitable to be inserted into the recessed area (4) of the main floor carpet (1), **characterized in that** the main floor carpet (1) comprises at least a pocket (5) and **in that** the insert mat (2) comprises at least a tab (3), whereby the tab (3) is arranged within the pocket (5).

2. Automotive carpet arrangement according to claim 1 **characterized in that** the pocket (5) is arranged in a border wall created by the recessed area (4).

3. Main floor carpet (1) for a carpet arrangement in accordance with claim 1 comprising at least a recessed area (4) **characterised in that** at least a pocket (5) is arranged in a border wall of the recessed area (4).

4. Insert mat (2) for a carpet arrangement in accordance with claim 1, **characterised in that** the insert mat (2) comprises at least a tab (3) suitable to fit into a pocket (5) of a main floor carpet (1) in accordance with claim 1 or 3.

5. Insert mat (2) for a carpet arrangement in accordance with claim 1, **characterised in that** the insert mat (2) is reversible.
